(19) Europäisches Patentamt
European Patent Office
Office européen des brevets

(11) EP 1 218 389 B1

(12) EUROPEAN PATENT SPECIFICATION

(45) Date of publication and mention of the grant of the patent:
**22.10.2003 Bulletin 2003/43**

(21) Application number: **00955616.8**

(22) Date of filing: **17.08.2000**

(51) Int Cl.[7]: **C07F 15/04**, B01J 31/18, C07C 253/10, B01J 37/34

(86) International application number:
**PCT/US00/22527**

(87) International publication number:
**WO 01/014392 (01.03.2001 Gazette 2001/09)**

# (54) METHOD FOR ELECTROCHEMICAL PRODUCTION OF Ni(0) PHOSPHITE AND DIPHOSPHITE COMPLEXES

VERFAHREN FÜR DIE ELEKTROCHEMISCHE HERSTELLUNG VON NI(0) PHOSPHIT UND DIPHOSPHITKOMPLEXEN

PROCEDE DE PRODUCTION ELECTROCHIMIQUE DE COMPLEXES DE NI(0) PHOSPHITE ET DE DIPHOSPHITE

(84) Designated Contracting States:
**BE DE FR GB IT NL**

(30) Priority: **20.08.1999 RU 99118171**

(43) Date of publication of application:
**03.07.2002 Bulletin 2002/27**

(73) Proprietor: **E.I. DU PONT DE NEMOURS AND COMPANY**
**Wilmington Delaware 19898 (US)**

(72) Inventors:
- **STEPANOV, Andrei Aleksandrovich**
  **Moscow, 105023 (RU)**
- **GRINBERG, Vitali Arkad'evich**
  **Moscow, 121552 (RU)**
- **JACKSON, Scott, Christopher**
  **Wilmington, DE 19803 (US)**
- **LUNDGREN, Cynthia, Anne**
  **Rising Sun, MD 21911 (US)**
- **KULOVA, Tat'jana L'vovna**
  **Moscow, 117240 (RU)**

(74) Representative: **Carpmaels & Ransford**
**43 Bloomsbury Square**
**London WC1A 2RA (GB)**

(56) References cited:
**EP-A- 0 715 890**
**WO-A-96/39455**
**WO-A-97/24184**
**DE-A- 19 740 180**

EP 1 218 389 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

This application claims priority from Russian Application No. 99/118171, filed August 20, 1999.

## BACKGROUND OF THE INVENTION

### Field of the Invention

The invention pertains to a method for the electrochemical production of Ni(0) phosphite or diphosphite complexes in an electrolyzer, using direct or alternating current. The invention also relates to phosphite and diphosphite complexes and their use, for example, as catalysts.

### Description of Related Art

European Patent Application No. 0 715 890 A1 describes a method for producing a catalyst based on transition metal phosphines; B. Corain, G. Bontempeli, L. de Nardo, Gan-Antonio Mazzocchin, Inorganica Chimica Acta, 26 91978), 37, describe a method for producing a Ni (o-TTP) complex by anode dissolution of metallic nickel in acetonitrile with subsequent electroreduction of the nickel ions on a mercury cathode; M. Mori, Y. Hashimoto, Y. Ban, Tetrahedron Letters, 21 (1980), 63, describe a method for generation of a Ni $(PPh_3)_4$ complex by electrochemical reduction of $NiCl_2$ $(PPh_3)_4$,$PPh_3$ in dimethylformamide (DMF) in a diaphragm electrolyzer, using a Pb cathode and a Pt anode.

Coordination compounds of some transition metals are active homogeneous catalysts in reactions of organic compounds, especially in hydrocyanation processes.

Electrochemical methods for production of such catalysts are especially preferred, because the sources of metal ions can be accessible and easily prepared and the electrode can be placed in an adiponitrile (ADN) synthesis reactors (in a second stage). The electrode can be fully inert and activated by supplying the necessary voltage, once there is a need for a catalyst in the process. The concentration of metal ions in solution is proportional to the total amount of charge passed through the electrolyzer. Consequently, the amount of catalyst can be easily controlled by the amount of energy passed through the electrolyzer.

Electrochemical production of phosphite complexes of Co and Ni have been investigated. The process comprises two stages: anode dissolution of Co or Ni and subsequent cathode reduction of $M^{2+}$ in the presence of excess corresponding phosphorus ligands. Published articles on electrosynthesis of complexes are mostly devoted to investigating electrochemical behavior, some physical properties and the effect of nature of the tricovalent phosphorus ligands on the relative stability of Ni(II), Ni(I) and Ni(0) complexes. G. Bontempelli, F. Magno, G. Shiavon, B. Corain, Inorg. Chem., 20 (1981), 2579.

The shortcomings of the published results on direct and indirect electrosynthesis of Ni(0) complexes include electrodeposition of a finely ground metallic nickel on the surface of the cathode, despite the 15-500-fold excess of phosphorus ligand, the low yield of substance and the low current yield. Published results cannot be used as a basis for developing even a laboratory method for preparation of Ni(0) complexes.

### Summary of the Invention

There is thus a desire to provide new methods of making Ni(0) complexes and to provide Ni(0) complexes that are improved over those in the art.

In one embodiment, the invention provides a method for the electrochemical production of a phosphite or diphosphite Ni(0) complex comprising:

(a) dissolving metallic nickel from an anode in an aprotic solvent in a diaphragmless electrolyzer containing the anode and cathode to produce $Ni^{2+}$ nickel ions, and
(b) electroreduction o the nickel ions on the cathode in the presence of one or more phosphorus ligands by direct or alternating current, to thereby produce the complex.

In an alternate embodiment, the invention provides a method for the electrochemical production of a phosphite or diphosphite Ni(0) complex comprising:

(a) dissolving metallic nickel from an anode in an aprotic solvent in a diaphragmless electrolyzer containing the anode and cathode to produce $Ni^{2+}$ nickel ions, and
(b) reducing the nickel ions in solution in the presence of one or more phosphorus ligands by using a metal that is more electropositive than nickel, thereby producing oxidized nickel, and

(c) electroreducing and depositing said oxidized nickel at the cathode, thereby producing the complex.

Further objects, features, and advantages of the invention will become apparent from the detailed description that follows.

Detailed Description of Preferred Embodiments

The invention pertains to an electrochemical method for producing phosphite and diphosphite Ni(0) complexes in a diaphragmless electrolyzer, containing a cathode and anode, by anode dissolution of metallic nickel in an aprotic solvent with subsequent electroreduction of the nickel ions on the cathode in the presence of phosphorus ligands, using direct or alternating current.

The anode comprises nickel as the source of the produced Ni(0) complex. As discussed below, an additional anode can be used, e.g., to produce a Lewis acid. A preferred second anode is a zinc anode.

In the process of the invention, the anode can be in any form, including wire, rod, plate, or foam. Wire is often preferred because of its higher surface area.

The cathode preferably comprises a metal with low hydrogen overvoltage. "Low" means the overvoltage is close to the theoretical potential for hydrogen discharge. Useful metals includes platinum, gold, palladium, ruthenium, iridium, cobalt, molybdenum, nickel and iron.

Any desired phosphorus ligands can be used. Suitable phosphorous ligands include bidentate phosphorous-containing ligands such as bidentate phosphites, bidentate phophinites, bidentate phosphonites and bidentate phosphines. Most preferred ligands are bidentate phosphite ligands.

Suitable bidentate phosphite ligands are of the following structural formulae:

$$(R^1O)_2P(OZO)P(OR^1)_2,$$

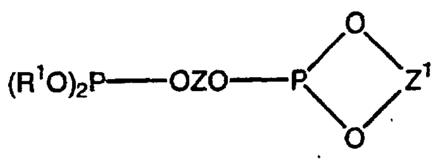 , and 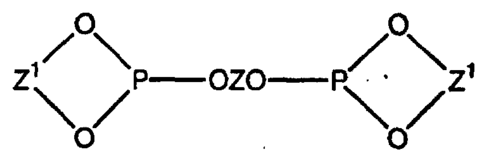

In these formulae, $R^1$ is phenyl, unsubstituted or substituted with one or more $C_1$ to $C_{12}$ alkyl or $C_1$ to $C_{12}$ alkoxy groups; or naphthyl, unsubstituted or substituted with one or more $C_1$ to $C_{12}$ alkyl or $C_1$ to $C_{12}$ alkoxy groups.

Z and $Z^1$ are independently selected from the groups consisting of structural formulae I, II, III, and IV:

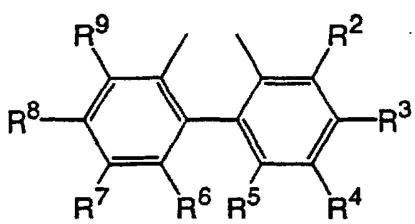

I

wherein:

$R^2$ and $R^9$ are the same or different, and are selected from H, $C_1$ to $C_{12}$ alkyl, and $C_1$ to $C_{12}$ alkoxy;
$R^3$ and $R^8$ are the same or different, and are selected from H, $C_1$ to $C_{12}$ alkyl, and $C_1$ to $C_{12}$ alkoxy;
$R^4$ and $R^7$ are the same or different, and are selected from H, $C_1$ to $C_{12}$ alkyl, and $C_1$ to $C_{12}$ alkoxy;
$R^5$ and $R^6$ are the same or different, and are selected from H, $C_1$ to $C_{12}$ alkyl, and $C_1$ to $C_{12}$ alkoxy;

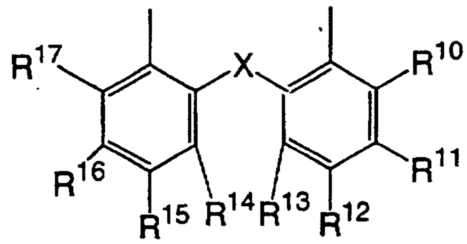

II

wherein:

X is O, S, $CH(R^{18})$, or $C(R^{18})(R^{19})$;
$R^{10}$ and $R^{17}$ are the same or different, and are selected from H, $C_1$ to $C_{12}$ alkyl, and $C_1$ to $C_{12}$ alkoxy;
$R^{11}$ and $R^{16}$ are the same or different, and are selected from H, $C_1$ to $C_{12}$ alkyl, and $C_1$ to $C_{12}$ alkoxy;
$R^{12}$ and $R^{15}$ are the same or different, and are selected from H, $C_1$ to $C_{12}$ alkyl, and $C_1$ to $C_{12}$ alkoxy;
$R^{13}$ and $R^{14}$ are the same or different, and are selected from H, $C_1$ to $C_{12}$ alkyl, and $C_1$ to $C_{12}$ alkoxy; and
$R^{18}$ and $R^{19}$ are independently H or $C_1$ to $C_{12}$ alkyl;

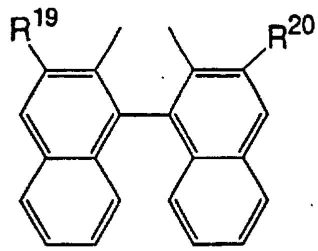

III

wherein:

$R^{20}$ and $R^{21}$ are the same or different, and are selected from H, $C_1$ to $C_{12}$ alkyl, and $C_1$ to $C_{12}$ alkoxy; and $CO_2R^{22}$,
$R^{22}$ is $C_1$ to $C_{12}$ alkyl or $C_6$ to $C_{10}$ aryl, unsubstituted or substituted with $C_1$ to $C_4$ alkyl groups. The aryl groups are preferably phenyl or naphthyl.

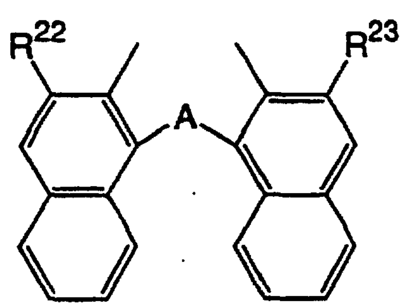

IV

wherein:

A is O, S, $CH(R^{24})$;
$R^{23}$ and $R^{24}$ are the same or different, and are selected from H and $CO_2R^{25}$;
$R^{25}$ and $R^{26}$ are H or $C_1$ to $C_{12}$ alkyl;
$R^{27}$ is $C_1$ to $C_{12}$ alkyl.

In the above structural formulae, the $C_1$ to $C_{12}$ alkyl, and $C_1$ to $C_{12}$ alkoxy groups may be straight chains or branched, substituted or unsubstituted. Any substituent can be used that does not undesirably interfere with the process

Examples of ligands that can be used in the present process include those having the formulae V to XXIV, shown below.

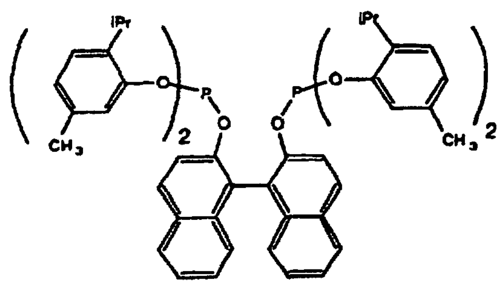

V (where iPr is isopropyl)

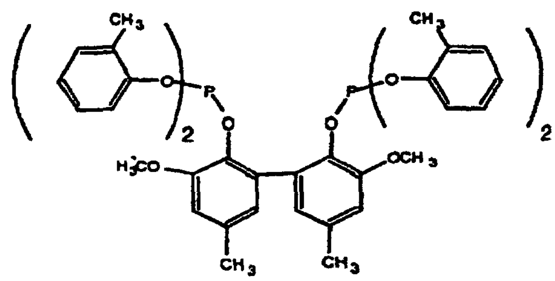

VI

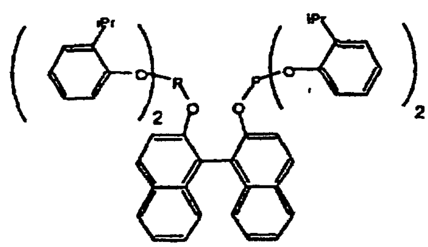

VII

(where iPr is isopropyl)

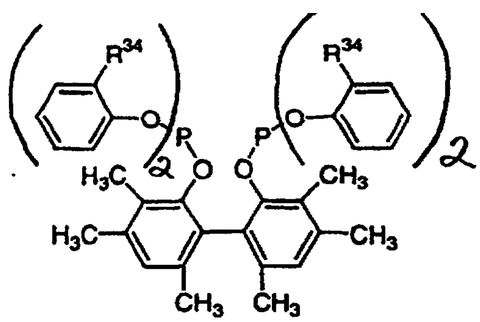

VIII

(where $R^{34}$ is methyl or ethyl)

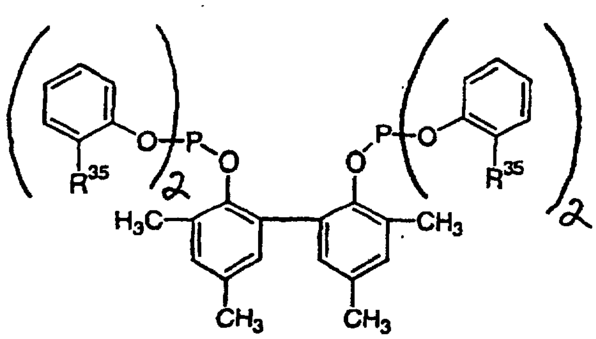

IX

(where $R^{35}$ is methyl, ethyl, or isopropyl)

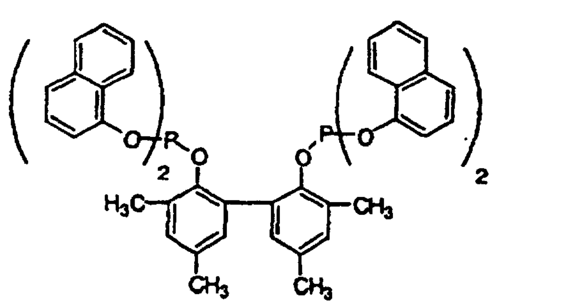

X

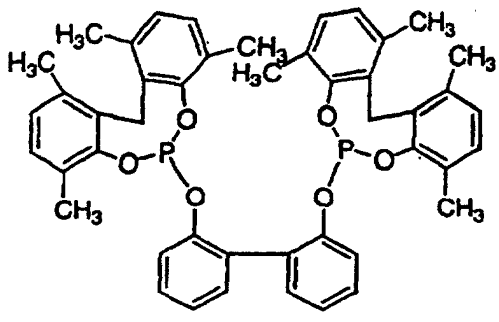

XI

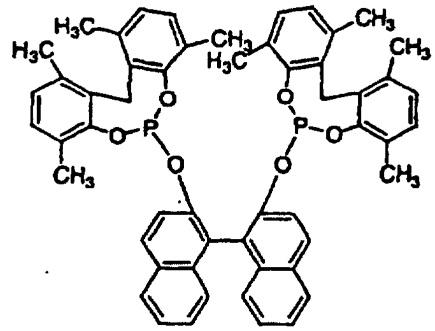

XII

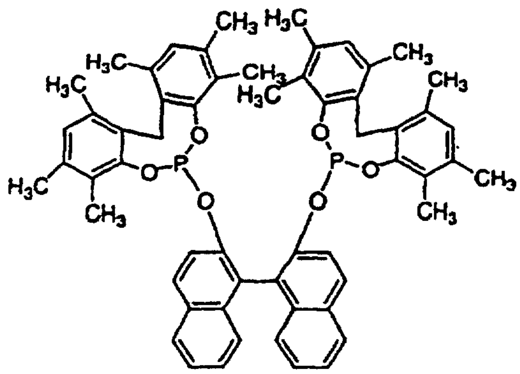

XIII

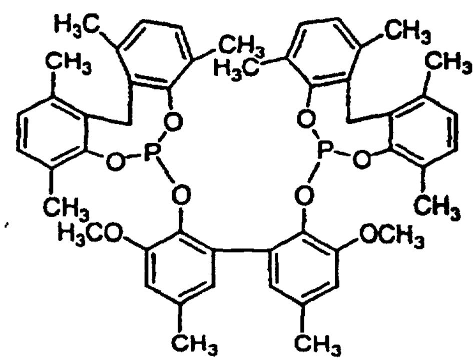

XIV

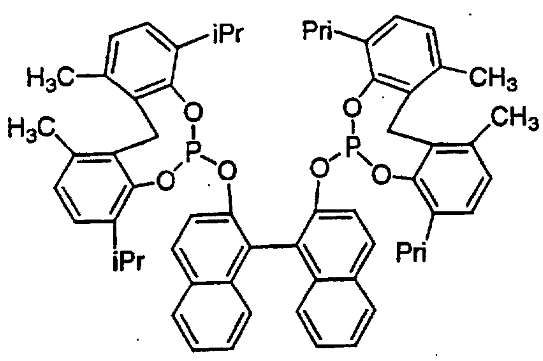

XV (where iPr is isopropyl)

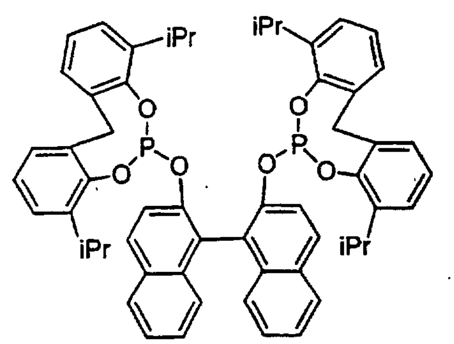

XVI (where iPr is isopropyl)

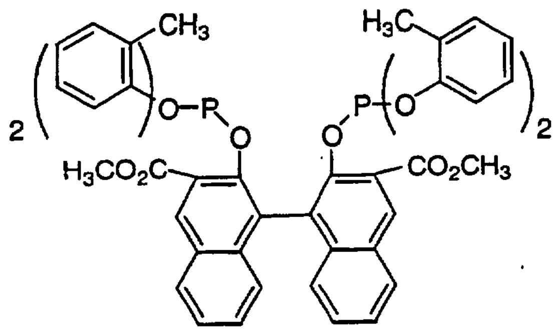

XVII

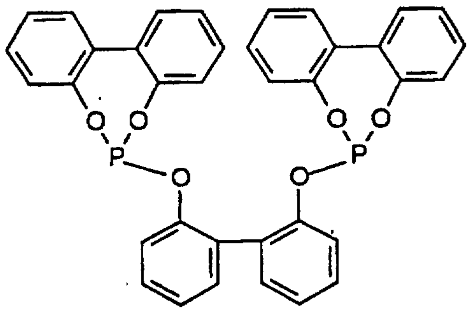

XVIII

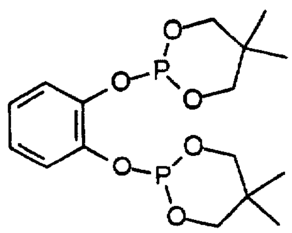

XIX

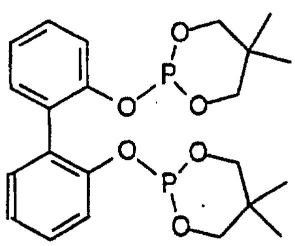

XX

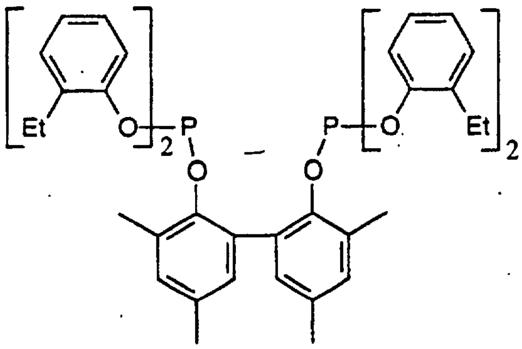

XXI

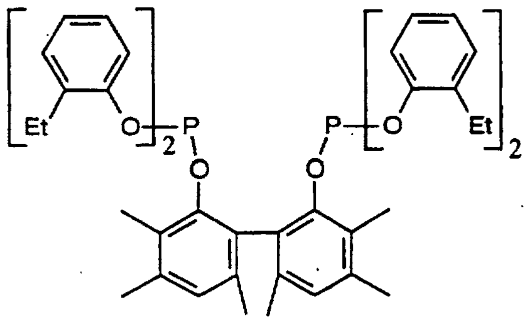

XXII

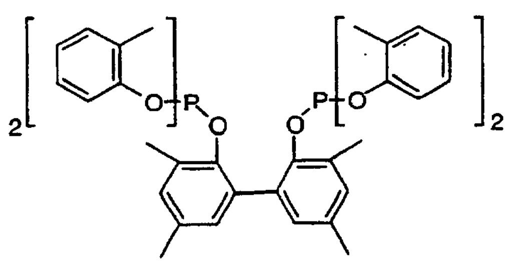

XXIII

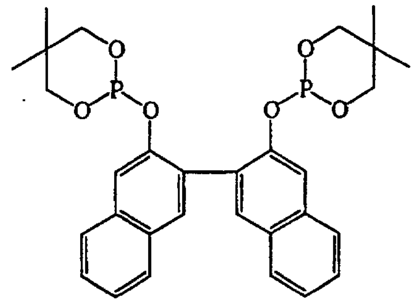

XXIV

Suitable bidentate phosphites are of the type disclosed in U. S. Patents 5,512,695, 5,512,696, 5,663,369, and 5,723,641. Suitable bidentate phosphinites are of the type disclosed in U. S. Patents 5,523,453 and 5,693,843.

Monodentate phosphites are also suitable ligands for the process of the invention. Examples of suitable monodentante phosphite ligands are shown by structures XXVII and XXVIII:

$P-(OR_1)_3$

XXVII

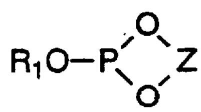

XXVIII

wherein:

$R^1$ and Z are as previously defined above.

Specific examples of monodentate phosphite ligands suitable for this process include the following representative examples:

| | |
|---|---|
| $P(OPh_3)_3$ | XXXIX |
| $P(P\text{-}TTP)_3$ | LX |
| $P(o\text{-}TTP)_3$ | LXI |

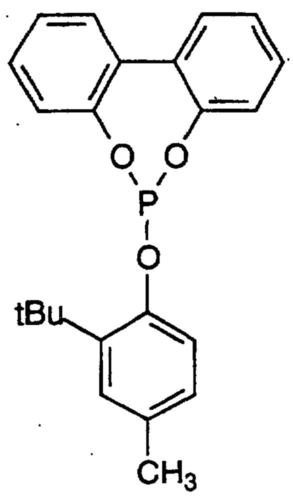

LXII

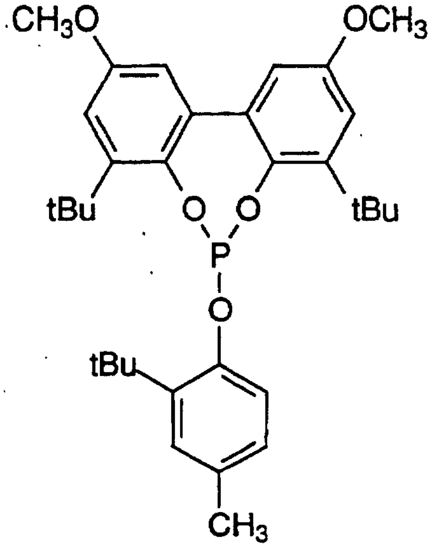

LXIII

The present invention has advantages over prior methods for direct electrosynthesis of phosphite and diphosphite Ni(0) complexes, which can be used as catalysts. These advantages include:

i. obtaining higher yield, for example, from 50 to 100% phosphite and diphosphite Ni(0) complexes, depending on the nature of the ligand and the nature of the solvent;

ii. the ability to use in the cathode reaction, complex ions of nickel $Ni(acac)_2$ in acetonitrile and dimethylformamide solutions (these are weakly coordinating solvents) and $Ni^{2+}$ ions coordinated with 3-pentenenitrile in 3-pentenenitrile solution;

iii. the ability to use cathode materials with low hydrogen overvoltage, preferably a nickel electrode;

iv. the ability to use in the concluding stage, of electrosynthesis of Ni(0) complexes, i.e., after use of a nickel anode, of a dissolving zinc anode or anodes from group I, II, IV, V, VI, VII and VIII metals. Useful metals are not limited by but include: Na, Li, Mg, Ca, Ba, Sr, Ti, V, Fe, Cr, Mn, Co, Cu, Zn, Cd, Al, Ga, In, Sn, Pb, and Th, with Zn being preferred. This permits elimination of anode oxidation of the end products and simultaneous introduction of a Lewis acid to the catalytic system, which favorably affects the subsequent chemical conversions with participation of the catalysts. In contrast, in European Patent Application of Rhone-Poulenc No. 0715890, the Lewis acids were introduced to the cathode chamber of the electrolyzer from the outside.

The present process enjoys major advantages in comparison with the prior methods: points (ii) and (iii) prevent electrodeposition of metallic nickel on the electrode surface. Also, the developed method can use phosphorus ligands in amounts that correspond to the equimolar amount of dissolved nickel.

The complexes thus produced are useful as catalysts, for example, for olefin hydrocyanation and alkene nitrile isomerization. Specific examples are the hydrocyanation of butadiene to produce 2-methyl-3-buenenitrile and 3-pentenenitrile, the hydrocyanation of 3-pentenenitrile to adiponitrile, and the isomerization of 2-methyl-3-butenenitrile to 3-pentenenitrile. These complexes are also potentially useful as catalysts and reagents for other chemical transformation, such as coupling reactions.

In Examples I through XXVII that follow, electrosynthesis of phosphite and diphosphite Ni(0) complexes was run in a diaphragmless electrolyzer equipped with a water jacket, reflux condenser, and two nickel electrodes. In Example XXVIII, electrosynthesis of diphosphite Ni(0) complex was run in a diaphragmless electrolyzer equipped with a single nickel anode and a copper cathode. The solvents used should have a suitable dielectric, in which the ligands and optional electrolyte are soluble. The solvents include (acetonitrile (AN), dimethylformamide (DMF), or 3-pentenenitrile (3-PN)), using $Bu_4NBr$ as background electrolyte. A background electrolyte is a salt that adds conductivity, but does not participate in the reaction. Any desired background electrolyte can be used. For example, other organoammonium electrolytes may be used provided that they are soluble in the solvent chosen AN, DMF, 3-PN for preparative electrolysis and voltamperometry were purified according to generally adopted methods. 3-PN was purified by distillation under vacuum in an argon atmosphere. The solution during electrosynthesis was continuously agitated on a

magnetic stirrer and scavenged with high purity argon. When electrolysis was run in the presence of acetylacetone (acac), the molar ratio of $Ni^{2+}$:acac was 1:2, the amount of electricity corresponded to full conversion of the dissolved $Ni^{2+}$ ions in $Ni(acac)_2$, whereupon the ligand was added and an amount of electricity equivalent to the added ligand passed through.

The ingredients, e.g. solvent, liquid, and electrolyte, can be present in any proportion so long as the intended production of the Ni(0) complex is achieved.

A preferred molar ratio of dissolved nickel ions to phosphite ligand was' $Ni^{2+}$:$P(OR)_3$ = 1:4 to 1:20. A preferred ratio of dissolved nickel ions to diphosphite ligand was $Ni^{2+}$:diphos = 1:1 to 1:8 Acceptable ranges are $Ni^{2+}$:$P(OR)_3$ = 1:2 to 1:40; $Ni^{2+}$:diphos = 2:1 to 1:20.

The ligands can be monophosphite ligand with a generic structure $P(OAr)_3$ (see structure XXVII), diphosphite ligands of generic structure $(ArO)_2POZOP(OAr)_2$ (see structure on pg 3), or sterically hindered diphosphite ligands of the same generic structure as a nonsterically hindered ligand, with the exception that the hydrocarbyl substiuents on the various aromatic rings are large enough to prevent two such ligands from simultaneously coordinating to nickel.

The produced complexes can have generic structures:

(i) Ni(bidentate diphosphite)$_2$,
(ii) Ni(monodentate phosphite)$_n$,
wherein n=3 or 4, or
(iii) Ni(bulky bidentate diphosphite)$L_m$,
wherein L= a neutral electron donor ligand such as an olefin,
and m = 1 or 2.

Preparative electrolysis and recording of voltamperograms were carried out on a PAR model 273 potentiostat/galvanostat. Analysis of the phosphite and diphosphite Ni(0) complexes was accomplished using cyclic voltamperometry on a glass-carbon electrode. The $^{31}$P-NMR spectra were obtained on a Bruker WP-80SY 32.4 MHz spectrometer (internal standard 85% phosphoric acid) and by ultimate analysis.

Phosphite ligands based on p-tritolyl phospite (p-TTP), o-tritolyl phosphite (o-TTP) and trimethyl phosphite $(MeO)_3P$, as well a diphosphite ligands based on pyrocatechol, 2-2'-bis(phenol) and bis(naphthol) were used as ligands. Unless otherwise indicated, the ligands were prepared by methods known to those skilled in the art, such as described in U.S. Patent Nos. 5,688,986, 5,663,369, 5,512,696, and 5,512,695, or acquired from Aldrich.

Nickel and zinc anodes and nickel cathodes were preferred in the electrosynthesis processes. Galvanostatic electrolysis is one done by constant current.

The invention is illustrated by the following non-limiting examples.

Example I

Galvonostatic electrolysis was run in a glass diaphragmless electrolyzer (volume 50 mL) with a Ni anode in the form of a wire (surface area 5 $cm^2$) and a nickel cathode in the form of wire (surface area 4 $cm^2$). The following were charged to the electrolyzer: 20 mL AN, 0.6 g (1.86 mmol) $Bu_4NBr$, and 2.0 g (5.7 mmol) p-TTP.

The galvanostatic electrolysis was carried out at a current of 60 mA and 25°C. 108 mAh of electricity was passed through. The 2.0 g (5.7 mmol) of p-TTP ligand was introduced after 26 mAh of electricity had been passed through. After completion of electrolysis, the electrolyte was filtered, and a three-fold volume of methanol was added to the filtrate and it was filtered again after 30 minutes. The $Ni(p\text{-}TTP)_4$ precipitate was washed with methanol and dried in vacuum for 5 hours. 0.3 g $Ni(p\text{-}TTP)_4$ was isolated. Current yield (CY) - 15%.

Example II

Galvonostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 20 mL AN, 0.6 g (1.86 mmol) $Bu_4NBr$, 0.12 g (1.2 mmol) acetylacetone (acac), and 2.0 g (5.7 mmol) p-TTP.

The galvanostatic electrolysis was run at a current of 60 mA and 25°C. 96 mAh of electricity was passed through. The 2.0 g (5.7 mmol) of p-TTP ligand was introduced after 20 mAh of electricity had been passed through. The complex was isolated as described in Example I. 0.48 g $Ni(p\text{-}TTP)_4$ was isolated. Current yield (CY)-24%.

Example III

Galvonostatic electrolysis was run in a glass diaphragmless electrolyzer (volume 50 mL) with a Ni anode in

the form of a wire (surface area 5 $cm^2$) and a nickel cathode in the form of a wire (surface area 4 $cm^2$). The following were charged to the electrolyzer: 20 mL DMF, 0.6 g (1.86 mmol) $Bu_4NBr$, and 2.0 g (5.7 mmol) p-TTP.

The galvanostatic electrolysis was carried out at a current of 60 mA and 25°C. 136 mAh of electricity was passed through. The 2.0 g (5.7 mmol) of p-TTP ligand was introduced after 60 mAh of electricity had been passed through. The complex was isolated as described in Example I. < 0.1 g $Ni(p\text{-}TTP)_4$ was isolated. Current yield (CY) < 5%.

Example IV

Galvanostatic electrolysis was run in a glass diaphragmless electrolyzer (volume 50 mL) with a Ni anode in the form of a wire (surface area 5 $cm^2$) and a nickel cathode in the form of wire (surface area 4 $cm^2$). The following were charged to the electrolyzer: 20 mL DMF, 0.6 g (1.86 mmol) $Bu_4NBr$, 0.3 g (3 mmol) acetylacetone (acac), and 2.0 g (5.7 mmol) p-TTP. ACAC is a ligand for the $Ni^{2+}$ which is generated electrochemically.

The galvanostatic electrolysis was run at a current of 60 mA and 25°C. 156 mAh of electricity was passed through. The 2.0 g (5.7 mmol) of p-TTP ligand was introduced after 80 mAh of electricity had been passed through. The complex was isolated as described in Example L 1.0 g $Ni(p\text{-}TTP)_4$ was isolated. Current yield (CY) equals 50%.

Example V

Galvanostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 20 mL 3-PN, 0.6 g (1.86 mmol) $Bu_4NBr$, and 2.0 g (5.7 mmol) p-TTP.

The galvanostatic electrolysis was run at a current of 60 mA and 25°C. 111 mAh of electricity was passed through. The 2.0 g (5.7 mmol) of p-TTP ligand was introduced after 35 mAh of electricity had been passed through. $Ni(p\text{-}TTP)_4$ was not isolated. Current yield (CY) - 37.7%. The current yield was calculated based on the voltamperogram according to the equation of Rendels-Shevchik, see Z. Galyus, Theoretical Fundamentals of Electrochemical Analysis. Translation. Moscow. Mir. Publishers 1974, page 133.

Example VI

Galvanostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 20 mL 3-PN, 0.6 g (1.86 mmol) $Bu_4NBr$, 0.12 g (1.2 mmol) acetylacetone (acac), and 2.0 g (5.7 mmol) p-TTP.

The galvanostatic electrolysis was run at a current of 60 mA and 25°C. 104 mAh of electricity was passed through. The 2.0 g (5.7 mmol) of p-TTP ligand was introduced after 28 mAh of electricity had been passed through. $Ni(p\text{-}TTP)_4$ was isolated, as described in Example I. 0.75 g $Ni(p\text{-}TTP)_4$ was isolated. Current yield (CY) - 37.0% and 52.8% (determined before isolation, based on the voltamperogram according to the Rendels-Shevchik equation). 15.8% of the complex was lost during isolation.

Example VII

Galvanostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 20 mL 3-PN, 0.6 g (1.86 mmol) $Bu_4NBr$, 0.12 g (1.2 mmol) acetylacetone (acac), and 2.0 g (5.7 mmol) o-TTP.

The galvanostatic electrolysis was run at a current of 60 mA and 25°C. 117 mAh of electacity was passed through. The 2.0 g (5.7 mmol) of o-TTP ligand was introduced after 40 mAh of electricity had been passed through. $Ni(o\text{-}TTF)_4$ was not isolated. Current yield (CY) 26.0% (determined on the voltamperogram according to the Rendels-Shevchik equation).

Example VIII

Galvanostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 20 mL 3-PN, 0.6 g (1.86 mmol) $Bu_4NBr$, and 1.0 g (8.1 mmol) $(MeO)_3P$.

Galvanostatic electrolysis was run at a current of 60 mA and 25°C. 120 mAh of electricity was passed through. The 1.0 g (8.1 mmol) $(MeO)_3P$ ligand was introduced after 17 mAh of electricity was passed through. The complex was isolated as described in Example 1. 0.3 g $Ni[(MeO)_3P]_4$ was isolated. The current yield (CY) - 100%. (CY was

determined based on the voltamperogram according to the Rendels-Shevchik equation).

Example IX

Electrosynthesis of diphosphite Ni(0) complexes based on pyrocatechol derivatives (PD)

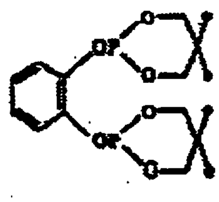

Galvanostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 20 mL 3-PN, 0.6 g (1.86 mmol) $Bu_4NBr$, 0.12 g (1.2 mmol) acetylacetone (acac), 0.8 g (2.1 mmol) PD. These reagents were obtained from Aldrich Chemical Company.

The galvanostatic electrolysis was run at a current of 60 mA and 25°C. 89 mAh of electricity was passed through. The 0.8 g (2.1 mmol) of PD ligand was introduced after 28 mAh of electricity had been passed through. The complex was isolated as described in Example 1. 0.45 g $Ni(PD)_2$ was isolated. Current yield (CY) 100.0%. CY was determined from the voltamperogram according to the Rendels-Shevchik equation.

Example X

Galvanostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 20 mL 3-PN, 0.6 g (1.86 mmol) $Bu_4NBr$, and 1.05 g (2.8 mmol) PD.

The galvanostatic electrolysis was run at a current of 60 mA and 25°C. 100 mAh of electricity was passed through. The 1.05 g (2.8 mmol) of PD ligand was introduced after 20 mAh of electricity had been passed through. The $Ni(PD)_2$ was not isolated. Current yield (CY) 100.0%. CY was determined from the voltamperogram according to the Rendels-Shevchik equation.

Example XI

Galvanostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 20 mL AN, 0.6 g (1.86 mmol) $Bu_4NBr$, 0.12 g (1.2 mmol) acac, and 1.05 g (2.8 mmol) PD.

The galvanostatic electrolysis was run at a current of 60 mA and 25°C. 91 mAh of electricity was passed through. The 1.05 g (2.8 mmol) of PD ligand was introduced after 20 mAh of electricity had been passed through. The $Ni(PD)_2$ complex was not isolated. Current yield (CY) 100.0%. CY was determined from the voltamperogram according to the Rendels-Shevchik equation.

Example XII

Electrosynthesis of diphospite nickel (0) complexes based on 2,2'-biphenol derivatives

Ligand A

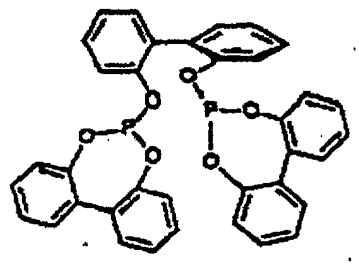

Galvanostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 40 mL 3-PN, 0.6 g (1.86 mmol) $Bu_4NBr$, and 1.3 g (2.12 mmol) ligand A. Ligand A was prepared analogous to the literature method (P. Pringle, et al., J. Chem. Soc., Chem. Commun. (1991), (12), 803-4).

The galvanostatic electrolysis was run at a current of 60 mA and 25°C. 102 mAh of electricity was passed through. The 1.3 g (2.12 mmol) of ligand A was introduced after 20 mAh of electricity had been passed through. The complex $Ni(A)_2$ was not isolated. Current yield (CY) was 36.3%. CY was determined from the voltamperogram according to the Rendels-Shevchik equation.

Example XIII

Galvanostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 30 mL 3-PN, 0.6 g (1.86 mmol) $Bu_4NBr$, 0.12 g (1.2 mmol) acac, and 1.3 g (2.12 mmol) ligand A.

The galvanostatic electrolysis was run at a current of 60 mA and 25°C. 99 mAh of electricity was passed through. The 1.3 g (2.12 mmol) ligand A was introduced after 20 mAh of electricity had been passed through. The complex $Ni(A)_2$ was isolated as described in Example I. 0.3 g $Ni(A)_2$ was isolated. Current yield (CY) 44.4.0%. According to $^{31}P$-NMR, the isolated product contained 75% diphosphite Ni(0) complex and 25% of the initial ligand A.

Example XIV

Ligand B

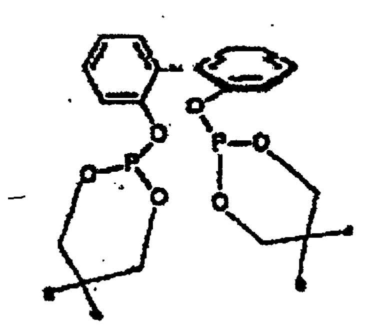

Galvanostatic electrolysis was run in a glass diaphragmless electrolyzer (volume 50 mL) with a Ni anode in the form of a wire (surface area 5 $cm^2$) and a nickel cathode in the form of a wire (surface area 5 $cm^2$). The following were charged to the electrolyzer: 20 mL AN, 0.6 g (1.86 mmol) $Bu_4NBr$, 0.12 g (1.2 mmol) acac, and 1.3 g (2.88 mmol) ligand B. Ligand B was prepared analogous to the method described in Batalova, T. A., et al., Russ. J. Gen. Chem. (1998), 68(10), 1570-1579.

The galvanostatic electrolysis was run at a current of 60 mA and 25°C. 112 mAh of electricity was passed

through. The 1.3 g (2.88 mmol)of ligand B was introduced after 22 mAh of electricity had been passed through. The $Ni(B)_2$ was isolated as described in Example I. 0.77 g $Ni(B)_2$ was isolated. Current yield (CY) 59.0%.

Diphosphite ligands:

| Ligand 115A | Ligand 115B | Ligand 115C |
|---|---|---|
| 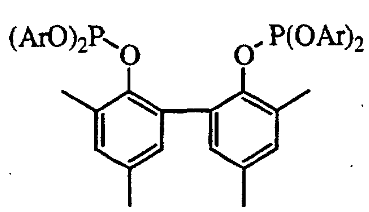 | 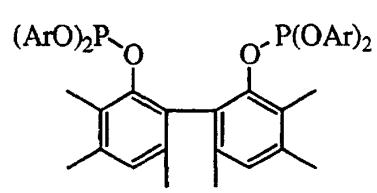 | 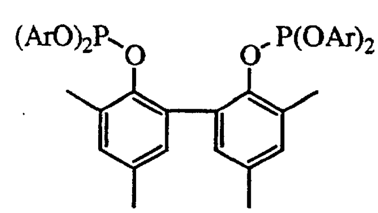 |
| OAr = 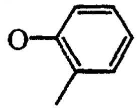 | OAr = 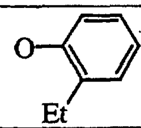 | OAr = 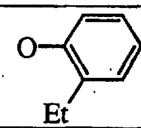 |
| **Molecular weight: 730.78** | **Molecular weight: 814.94** | **Molecular weight: 786.89** |

The sterically hindered diphosphite ligands are prepared by methods known to those skilled in the art. For instance, the preparation of ligand 115A is described in WO 9906358. Ligands 115B and 115C were prepared similarly from $ClP(O\text{-}2\text{-}EtC_6H_4)_2$ and 3, 3', 4, 4', 6, 6-bis-2,2'-phenol or 3,3', 5, 5'-bis-2, 2'-phenol, respectively.

In the case of sterically hindered bis(phosphite) ligands 115A, 115B and 115C, the complexes $(115A)_2Ni$, $(115B)_2Ni$, or $(115C)_2Ni$ could not be prepared. In examples XV, XVI and XVII, the possibility of formation of 115ANi $(3\text{-}PN)_x$, 115BNi(3-PN), and 115CNi$(3\text{-}PN)_x$ complexes was demonstrated.

Example XV

Ligand 115A

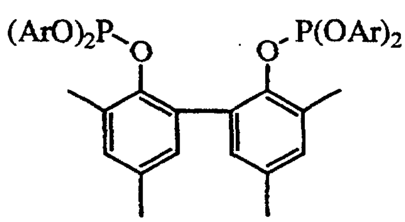

OAr = 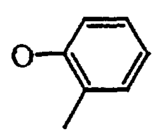

Galvanostatic electrolysis was run in a glass diaphragmless electrolyzer (volume 50 mL) with a Ni anode in the form of a wire (surface area 5 $cm^2$) and a nickel cathode in the form of a wire (surface area 5 $cm^2$). The following were charged to the electrolyzer: 25 mL 3-PN, 0.6 g (1.86 mmol) $Bu_4NBr$, and 1.84 g (1.15 mmol) 115A.

The galvanostatic electrolysis was run at a current of 60 mA and 25°C. 92 mAh of electricity was passed through. The 1.84 g (1.15 mmol) of ligand 115A was introduced after 30 mAh of electricity had been passed through. Complex 115ANi$(3\text{-}PN)_x$ was not isolated. Substance yield (SY) and current yield (CY) were 66.0% (determined according to the voltamperogram).

Example XVI

Ligand 115B

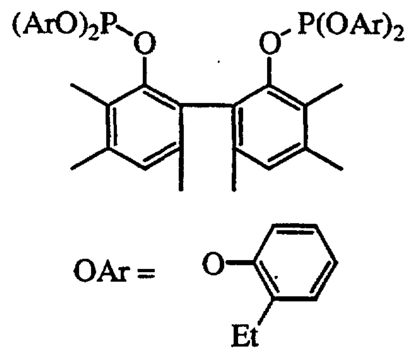

Galvanostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 25 mL 3-PN, 0.6 g (1.86 mmol) $Bu_4NBr$, and 0.74 g (0.9 mmol) 115B.

The galvanostatic electrolysis was run at a current of 60 mA and 25°C. 77 mAh of electricity was passed through. The 0.74 g (0.9 mmol) of ligand 115B was introduced after 28 mAh of electricity had been passed through. Complex 115BNi(3-PN)$_x$ was not isolated. Substance yield (SY) and current yield (CY) were 46.8% (determined according to the voltamperogram).

Example XVII

Ligand 115C

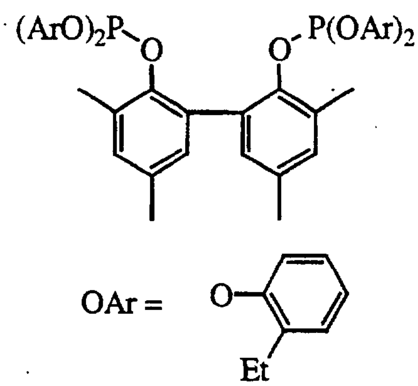

Galvanostatic electrolysis was run in a glass diaphragmless electrolyzer (volume 50 mL) with a Ni anode in the form of a wire (surface area 5 $cm^2$) and a nickel cathode in the form of a wire (surface area 4 $cm^2$). The following were charged to the electrolyzer: 25 mL E-PN, 0.6 g (1.86 mmol) $Bu_4NBr$, and 0.72 g (0.92 mmol) 115C.

The galvanostatic electrolysis was run at a current of 60 mA and 25°C. 78 mAh of electricity was passed through. The 0.72 g (0.92 mmol) ligand 115C was introduced after 28 mAh of electricity had been passed through. Complex 115CNi(3-PN)$_x$ was not isolated. Substance yield (SY) and current yield (CY) were 77.9% (determined according to the voltamperogram).

Electrosynthesis of LNi(crotyl)$CNZnBr_2$ complexes based on 2,2'-biphenol derivatives, 115A, 115B and 115C ligands.

Example XVIII

Ligand 115A

Galvanostatic electrolysis was run in a glass diaphragmless electrolyzer (volume 50 mL) with a Ni anode in the form of a wire (surface area 5 $cm^2$) and a nickel cathode in the form of a wire (surface area 5 $cm^2$). The following were charged to the electrolyzer: 25 mL 3-PN, 0.6 g (1.86 mmol) $Bu_4NBr$, and 1.0 g (1.37 mmol) 115A.

Galvanostatic electrolysis was run, at a current of 60 mA and 25°C. 144 mAh of electricity was passed through. The 1.0 g (1.15 mmol) ligand 115A was introduced after 30 mAh of electricity had been passed through. After 104 mAh of electricity had been passed through, the Ni anode was replaced with Zn and electrolysis continued. After dissolution of the Zn anode (surface area 4 $cm^2$) (amount of electricity 40 mAh), electrolysis was stopped and the electrolyte analyzed without isolation of 115ANi(crotyl)CN$ZnBr_2$. The substance yield was 65.8%. Current yield 42.7% (determined according to the voltamperogram).

Example XIX

Ligand 115B

Galvanostatic electrolysis was run in a glass diaphragmless electrolyzer (volume 50 mL) with a Ni anode in the form of a wire (surface area 5 $cm^2$) and a nickel cathode in the form of a wire (surface area 5 $cm^2$). The following were charged to the electrolyzer. 25 mL 3-PN, 0.6 g (1.86 mmol) $Bu_4NBr$, and 0.45 g (0.55 mmol) 115B.

The galvanostatic electrolysis was run at a current of 60 mA and 25°C. 76.5 mAh of electricity was passed through. The 0.45 g (0.55 mmol) ligand 115B was introduced after 30 mAh of electricity had been passed through. After 61.5 mAh of electricity had been passed through, the Ni anode was replaced with Zn and electrolysis continued. After dissolution of the Zn anode (surface area 4 $cm^2$) (amount of electricity 15 mAh for formation of 0.5 equivalent M of $ZnBr_2$), electrolysis was stopped and the electrolyte analyzed without isolation of 115BNi(crotyl)CN$ZnBr_2$. The substance yield was 62.2%. Current yield 41.5% (determined according to the voltamperogram).

Example XX

Ligand 115C

Galvanostatic electrolysis was run in a glass diaphragmless electrolyzer (volume 50 mL) with a Ni anode in the form of a wire (surface area 5 $cm^2$) and a nickel cathode in the form of a wire (surface area 5 $cm^2$). The following were charged to the electrolyzer: 25 mL 3-PN, 0.6 g (1.86 mmol) $Bu_4NBr$, and 0.88 g (1.12 mmol) 115C.

The galvanostatic electrolysis was run at a current of 60 mA and 25°C. 92.0 mAh of electricity was passed through. The 0.88 g (1.12 mmol) ligand 115C was introduced after 31 mAh of electricity had been passed through. After 61.0 mAh of electricity had been passed through, the nickel anode was replaced with zinc and electrolysis continued. After dissolution of the Zn anode (surface area 4 $cm^2$) (amount of electricity 31 mAh for formation of 0.5 equivalent M of $ZnBr_2$), electrolysis was stopped and the electrolyte analyzed without isolation of 115CNi(crotyl)CN$ZnBr_2$. The substance yield and current yield were 67.8% (determined according to the voltamperogram).

Electrosynthesis of diphosphite nickel (0) complexes based on bis(naphthol) derivatives

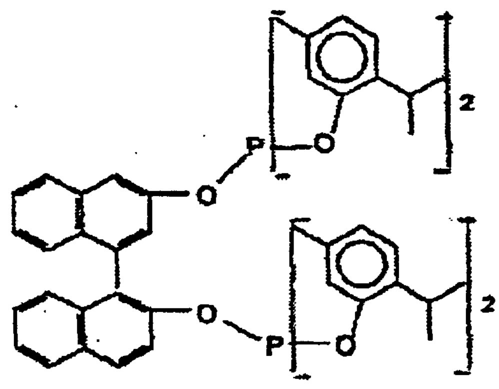

Ligand D5

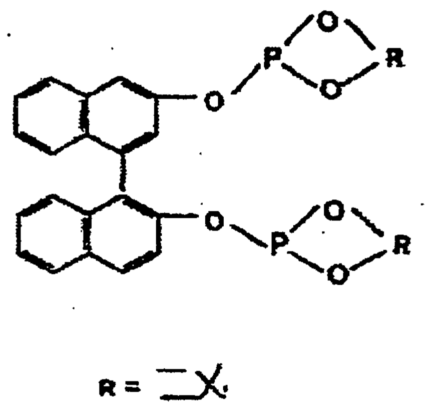

Ligand C

As in the case of the bis(phosphite) ligands 115A, 115B and 115C, ligand D5 is sterically hindered and the complex $(D5)_2Ni$ cannot be prepared for it. In Examples XXI - XXV, the production of D5Ni $(3PN)_x$ and D5Ni(crotyl) $(CNZnBr_2)$ complexes is demonstrated.

<u>Example XXI</u>

Ligand D5

Galvanostatic electrolysis was run in a glass diaphragmless electrolyzer (volume 50 mL) with a Ni anode in the form of a wire (surface area 5 $cm^2$) and a nickel cathode in the form of a wire (surface area 5 $cm^2$). The following were charged to the electrolyzer: 20 mL 3-PN, 0.6 g (1.86 mmol) $Bu_4NBr$, and 0.5 g (0.53 mmol) D5.

The galvanostatic electrolysis was run at a current of 60 mA and 25°C. 60 mAh of electricity was passed through. The 0.5 g (0.53 mmol) of ligand D5 was introduced after 30 mAh of electricity had been passed through. The D5Ni $(3\text{-}PN)_x$ complex was not isolated. The substance yield and current yield were 48.5% (determined according to the voltamperogram).

<u>Example XXII</u>

Ligand D5

Galvanostatic electrolysis was run in a glass diaphragmless electrolyzer (volume 50 mL) with a Ni anode in the form of a wire (surface area 5 $cm^2$) and a nickel cathode in the form of a wire (surface area 5 $cm^2$). The following were charged to the electrolyzer: 20 mL 3-PN, 0.6 g (1.86 mmol) $Bu_4NBr$, and 0.5 g (0.53 mmol) D5.

The galvanostatic electrolysis was run at a current of 60 mA and 25°C. 64 mAh of electricity was passed through. The 0.5 g (0.53 mmol) ligand D5 was introduced after 34 mAh of electricity had been passed through. The D5Ni $(3\text{-}PN)_x$ complex was not isolated. The substance yield was 56.6%. Current yield was 42.5% (determined according to the voltamperogram).

<u>Example XXIII</u>

Ligand D5

Galvanostatic electrolysis was run in a glass diaphragmless electrolyzer (volume 50 mL) with a Ni anode in the form of a wire (surface area 5 $cm^2$) and a nickel cathode in the form of a wire (surface area 5 $cm^2$). The following were charged to the electrolyzer: 20 mL 3-PN, 0.6 g (1.86 mmol) $Bu_4NBr$, and 0.5 g (0.53 mmol) D5.

The galvanostatic electrolysis was run at a current of 60 mA and 25°C. 104 mAh of electricity was passed

through. The 0.5 g (0.53 mmol) of ligand D5 was introduced after 34 mAh of electricity had been passed through. The D5Ni (3-PN)$_x$ complex was not isolated. The substance yield 56.6%. Current yield 42.5% (determined according to the voltamperogram).

Example XXIV

Ligand D5

Galvanostatic electrolysis was run in a glass diaphragmless electrolyzer (volume 50 mL) with a Ni anode in the form of a wire (surface area 5 cm$^2$) and a nickel cathode in the form of a wire (surface area 5 cm$^2$). The following were charged to the electrolyzer: 20 mL 3-PN, 0.6 g (1.86 mmol) $Bu_4NBr$, and 0.5 g (0.53 mmol) D5.

The galvanostatic electrolysis was run at a current of 60 mA and 25°C. 112 mAh of electricity was passed through. The 0.5 g (0.53 mmol) of ligand D5 was introduced after 30 mAh of electricity had been passed through. After 30 mAh of electricity had been passed through, the nickel anode was replaced with Zn and the electrolysis continued. After dissolution of the Zn anode (surface area 5 cm2) (amount of electricity 82 mAh), electrolysis was stopped and the electrolyte analyzed without isolating the D5Ni(crotyl)CNZn$Br_2$ complex. Substance yield was 58.2%. Current yield 33.6% (determined according to the voltamperogram).

Example XXV

Ligand D5

Galvanostatic electrolysis was run in a glass diaphragmless electrolyzer (volume 50 mL) with a Ni anode in the form of a wire (surface area 5 cm$^2$) and a nickel cathode in the form of a wire (surface area 5 cm$^2$). The following were charged to the electrolyzer: 20 mL 3-PN, 0.6 g (1.86 mmol) $Bu_4NBr$, and 1.0 g (1.06 mmol) D5.

The galvanostatic electrolysis was run at a current of 60 mA and 25°C. 326 mAh of electricity was passed through. The 1.0 g (1.06 mmol) of ligand D5 was introduced after 59 mAh of electricity had been passed through. After 59 mAh of electricity had been passed through, the Ni anode was replaced with Zn and the electrolysis continued. After dissolution of the Zn anode (surface area 5 cm$^2$) (amount of electricity 267 mAh), electrolysis was stopped and the electrolyte analyzed without isolation of DSNi(crotyl)CNZn$Br_2$ complex. Substance yield was 76.1%. Current yield 38.1% (determined according to the voltamperogram).

Example XXVI

Ligand C

Galvanostatic electrolysis was run in a glass diaphragmless electrolyzer (volume 50 mL) with a Ni anode in the form of a wire (surface area 5 cm$^2$) and a nickel cathode in the form of a wire (surface area 5 cm$^2$). The following were charged to the electrolyzer: 20 mL 3-PN, 0.6 g (1.86 mmol) $Bu_4NBr$, 1.12 g (1.2 mmol) acac, and 1.6 g (1.2 mmol) C.

The galvanostatic electrolysis was run at a current of 60 mA and 25°C. 98 mAh of electricity was passed through. The 1.6 g (2.9 mmol) of ligand C was introduced after 20 mAh of electricity had been passed through. 0.3 g NiC2 was isolated. Substance yield 54.8% (determined according to the voltamperogram).

Electrosynthesis of phosphite Ni(0) complexes, using alternating current Frequency of alternating current 50 Hz

Example XXVII

Preparative electrolysis was run in a glass diaphragmless electrolyzer (volume 50 mL) with a Ni anode in the form of a wire (surface area 5 cm$^2$) and a nickel cathode in the form of a wire (surface area 5 cm$^2$). The following were charged to the electrolyzer. 20 mL 3-PN, 0.6 g (1.86 mmol) $Bu_4NBr$, 0.12 g (1.2 mmol) acac, and 2.0 g (5.7 mmol) p-TTP.

Electrolysis was run on a symmetric alternating current of 120 mA at 25°C. 234 mAh of electricity was passed through. 2.0 g (5.7 mmol) p-TTP ligand was introduced after 36 mAh of electricity had been passed through. The complex Ni(p-TTP)$_4$ was not isolated. Substance yield was 39%. Current yield was 14.8% (determined according to the voltamperogram).

Example XXVIII

Preparative electrolysis was run in a glass diaphragmless electrolyzer (volume 200 mL) with a Ni anode in

the form of a 0.64 cm diameter rod and a copper cathode in the form of a wire. A silver wire reference electrode was used to control the anode voltage. The following were charged to the electrolyzer: 100 grams 3-PN, 11.703 grams of ligand V, 11.37 gr of $ZnCl_2$, 1.394 gr of finely divided zinc powder. The $ZnCl_2$ was used to increase the conductivity of the solution. The zinc was used to reduce the Ni+2 in solution to Ni(0) by the reaction:

$$Ni[+2] \text{ (solution)} + Zn[0] \text{ (suspended solid)} + \text{ligand} \rightarrow \text{ligand: } Ni(0) + Zn[+2].$$

The ligand: Ni(0) is the active catalyst.

The Zn[+2] is then reduced at the cathode and plates out as Zn(0).

The zinc can be replaced with iron or any other reducing metal which is more electropositive than nickel. The reducing metal is preferably finely divided.

Electrolysis was run at a DC voltage of 1.8 volts (Vs the Ag electrode). The current was 10 to 20 milliamps. The solution temperature was controlled between 40 to 43° C. A dark orange color was observed after 392 coulombs. A sample taken after 560 coulombs of current indicated 0.025 wt% elemental nickel in solution as catalyst. Total current passed through the solution was 672 coulombs. Current yield to active catalyst was 18%.

## Claims

1. A method for the electrochemical production of a phosphite or diphosphite Ni(0) complex comprising

   (a) dissolving metallic nickel from an anode in an aprotic solvent in a diaphragmless electrolyzer containing the anode and cathode to produce $Ni^{2+}$ nickel ions, and
   (b) electroreduction of the nickel ions on the cathode in the presence of one or more phosphorus ligands by direct or alternating current, to thereby produce the complex.

2. A method according to claim 1, wherein the cathode comprises a metal selected from the group consisting of platinum, gold, palladium, ruthenium, iridium, cobalt, molybdenum, nickel, and iron.

3. A method according to claim 1, wherein the produced complex contains a phosphite ligand of the formula $P(OR)_3$, where R is an alkyl radical containing from 1 to 10 carbon atoms, an aryl group, or a hydrocarbyl radical containing from 1 to 20 carbon atoms, or a diphosphite ligand wherein two phosphite moieties are linked by a substituted or unsubstituted pyrocatechol, bis (phenol), or bis(naphthol).

4. A method according to claim 1, wherein the mole ratio between the nickel ions and the phosphorus ligands in the complex produced is 1:4 in the case of phosphite ligands, 1:2 in the case of diphosphite ligands, or 1:1 in the case of sterically hindered diphosphite ligands.

5. A method according to claim 1, wherein the dissolving and the electroreduction occurs in a solution comprising one or more of acetonitrile, dimethylformamide, and 3-pentenenitrile.

6. A method according to claim 1, wherein the dissolving and electroreduction occurs in the presence of acetylacetone.

7. A method according to claim 6, wherein the molar amount of acetylacetone equals the amount of $Ni^{2+}$ ions dissolved during a preliminary electrolysis.

8. A method according to claim 1, wherein the anode has a current density of 1-20 $mA/cm^2$.

9. A method according to claim 1, wherein the cathode has a current density of 1-15 $mA/cm^2$.

10. A method according to claim 1, wherein the electroreduction is conducted at a temperature of -10°C to 40°C.

11. A method according to claim 1, wherein the electroreduction is run with a second dissolving anode in addition to that containing nickel used in step (a), chosen from group II, IV, V, VI, VII, and VIII metals.

12. A method according to claim 11, wherein the second dissolving anode comprises zinc and the cathode comprises

nickel.

**13.** A method according to claim 12, wherein the ratio of surface area of the Zn anode to the Ni cathode is about 1:1.

**14.** A method according to claim 12, wherein the amount of dissolved $Zn^{2+}$ ions from the Zn anode is approximately equal to the amount of the formed Ni(0) complex.

**15.** A method according to claim 1, wherein alternating current is used in the electroreduction.

**16.** A method of olefin hydrocyanation or alkene nitrite isomerization comprising using a complex produced according to claim 1 as a catalyst, to hydrocyanate or isomerize an olefin or nitrite.

**17.** A method for the electrochemical production of a phosphite or diphosphite Ni(0) complex comprising

(a) dissolving metallic nickel from an anode in an aprotic solvent in a diaphragmless electrolyzer containing the anode and cathode to produce $Ni^{2+}$ nickel ions, and
(b) reducing the nickel ions in solution in the presence of one or more phosphorus ligands by using a metal that is more electropositive than nickel, thereby producing oxidized nickel, and
(c) electroreducing and depositing said oxidized nickel at the cathode, thereby producing the complex.

**Patentansprüche**

**1.** Verfahren für die elektrochemische Herstellung eines Phosphit- oder Diphosphit-Ni(0)-Komplexes, umfassend:

(a) Auflösen von metallischem Nickel aus einer Anode in einem aprotischen Lösemittel in einer diaphragmafreien Elektrolysezelle, die die Anode und Kathode enthält, um $Ni^{2+}$-Nickelionen zu erzeugen; und

(b) Elektroreduktion der Nickelionen an der Kathode in Gegenwart von einem oder mehreren Phosphor-Liganden durch Gleichstrom oder Wechselstrom, um dadurch den Komplex zu erzeugen.

**2.** Verfahren nach Anspruch 1, bei welchem die Kathode ein Metall aufweist, ausgewählt aus der Gruppe, bestehend aus Platin, Gold, Palladium, Ruthenium, Iridium, Cobalt, Molybdän, Nickel und Eisen.

**3.** Verfahren nach Anspruch 1, bei welchem der erzeugte Komplex einen Phosphit-Liganden der Formel $P(OR)_3$ enthält, worin R ein Alkylrest ist, der 1 bis 10 Kohlenstoffatome enthält, eine Aryl-Gruppe oder ein Hydrocarbylrest, der 1 bis 20 Kohlenstoffatome enthält, oder ein Diphosphit-Ligand, worin 2 Phosphit-Teile miteinander über ein substituiertes oder unsubstituiertes Pyrocatechin, Bisphenol oder Bisnaphthol verknüpft sind.

**4.** Verfahren nach Anspruch 1, bei welchem das Molverhältnis zwischen den Nickelionen und den Phosphor-Liganden in dem erzeugten Komplex 1:4 im Falle von Phosphit-Liganden, 1:2 im Falle von Diphosphit-Liganden oder 1:1 im Falle von sterischen gehinderten Diphosphit-Liganden beträgt.

**5.** Verfahren nach Anspruch 1, bei welchem das Auflösen und die Elektroreduktion in einer Lösung erfolgt, die eines oder mehrere der Folgenden enthält: Acetonitril, Dimethylformamid und 3-Pentennitril.

**6.** Verfahren nach Anspruch 1, bei welchem das Auflösen und die Elektroreduktion in Gegenwart von Acetylaceton erfolgt.

**7.** Verfahren nach Anspruch 6, bei welchem die molare Menge von Acetylaceton gleich der Menge der aufgelösten $Ni^{2+}$-Ionen während einer Vorelektrolyse ist.

**8.** Verfahren nach Anspruch 1, bei welchem die Anode eine Stromdichte von 1 bis 20 $mA/cm^2$ hat.

**9.** Verfahren nach Anspruch 1, bei welchem die Kathode eine Stromdichte von 1 bis 15 $mA/cm^2$ hat.

**10.** Verfahren nach Anspruch 1, bei welchem die Elektroreduktion bei einer Temperatur von -10° bis 40°C ausgeführt wird.

**11.** Verfahren nach Anspruch 1, bei welchem die Elektroreduktion mit einer zweiten auflösenden Anode ausgeführt wird, die zusätzlich zu dem in Schritt (a) verwendeten Nickel Metalle enthält, ausgewählt aus der Gruppe II, IV, V, VI, VII und VIII.

**12.** Verfahren nach Anspruch 11, bei welchem die zweite auflösende Anode Zink und die Kathode Nickel aufweist.

**13.** Verfahren nach Anspruch 12, bei welchem das Verhältnis der Oberfläche der Zn-Anode zu der der Ni-Kathode etwa 1:1 beträgt.

**14.** Verfahren nach Anspruch 12, bei welchem die Mengen der aufgelösten $Zn^{2+}$-Ionen von der Zn-Anode näherungsweise gleich der Menge des gebildeten Ni(0)-Komplexes ist.

**15.** Verfahren nach Anspruch 1, bei welchem bei der Elektroreduktion Wechselstrom verwendet wird.

**16.** Verfahren zur Hydrocyanierung von Olefin oder Isomerisierung von Alkennitril, umfassend die Verwendung eines nach Anspruch 1 erzeugten Komplexes als einen Katalysator zur Hydrocyanierung oder Isomerisierung eines Olefins oder Nitrils.

**17.** Verfahren für die elektrochemische Herstellung eines Phosphit- oder Diphosphit-Ni(0)-Komplexes, umfassend:

(a) Auflösen von metallischem Nickel aus einer Anode in einem aprotischen Lösemittel in einer diaphragmafreien elektrolytischen Zelle, die die Anode und Kathode enthält, um $Ni^{2+}$-Nickelionen zu erzeugen, und
(b) Reduzieren der Nickelionen in Lösung in Gegenwart von eines oder mehrerer Phosphor-Liganden unter Verwendung eines Metalls, das stärker elektropositiv ist als Nickel, wodurch oxidiertes Nickel erzeugt wird; und
(c) Elektroreduzieren und Abscheiden des oxidierten Nickels an der Kathode, wodurch der Komplex erzeugt wird.

## Revendications

**1.** Procédé en vue de la production électrochimique d'un complexe Ni(0) de phosphite ou de diphosphite comprenant

(a) la dissolution d'un nickel métallique en provenance d'une anode dans un solvant aprotique dans un dispositif d'électrolyse sans diaphragme, contenant l'anode et la cathode, pour produire des ions de nickel $Ni^{2+}$, et

(b) l'électro-réduction des ions de nickel sur la cathode en présence d'un ou de plusieurs ligands du phosphore par un courant direct ou alternatif, pour produire ainsi le complexe.

**2.** Procédé selon la revendication 1, dans lequel la cathode comprend un métal sélectionné parmi le groupe constitué du platine, de l'or, du palladium, du ruthénium, de l'iridium, du cobalt, du molybdène, du nickel et du fer.

**3.** Procédé selon la revendication 1, dans laquelle le complexe produit contient un ligand de phosphite de la formule $P(OR)_3$, où R est un radical alkyle contenant de 1 à 10 atomes de carbone, un groupement aryle ou un radical hydrocarbyle contenant de 1 à 20 atomes de carbone ou un ligand de diphosphite dans lequel deux fractions de phosphite sont reliées par un pyrocatéchol, un bis(phénol) ou un bis(napthol), substitué ou non substitué.

**4.** Procédé selon la revendication 1, dans lequel le rapport molaire entre les ions nickel et les ligands du phosphore dans le complexe produit est de 1:4 dans le cas des ligands de phosphite, de 1:2 dans le cas des ligands de diphosphite ou de 1:1 dans le cas de ligands de diphosphite à encombrement stérique.

**5.** Procédé selon la revendication 1, dans lequel la dissolution et l'électro-réduction se produisent dans une solution comprenant un ou plusieurs des composés acétonitrile, diméthylformamide et 3-pentènitrile.

**6.** Procédé selon la revendication 1, dans lequel la dissolution et l'électro-réduction se produisent en présence d'acétylacétone.

**7.** Procédé selon la revendication 6, dans lequel la quantité molaire d'acétylacétone est égale à la quantité des ions $Ni^{2+}$ dissous au cours d'une électrolyse préliminaire.

**8.** Procédé selon la revendication 1, dans lequel l'anode a une densité de courant de 1-20 $mA/cm^2$.

**9.** Procédé selon la revendication 1, dans lequel la cathode a une densité de courant de 1-15 $mA/cm^2$.

**10.** Procédé selon la revendication 1, dans lequel l'électro-réduction est effectuée à une température de -10°C à 40°C.

**11.** Procédé selon la revendication 1, dans lequel l'électro-réduction est exécutée à l'aide d'une deuxième anode de dissolution en addition à celle contenant le nickel, utilisée dans l'étape (a), choisie parmi les métaux des groupes II, IV, V, VI, VII et VIII.

**12.** Procédé selon la revendication 11, dans lequel la deuxième anode de dissolution comprend le zinc et en ce que la cathode comprend du nickel.

**13.** Procédé selon la revendication 12, dans lequel le rapport de la superficie de l'anode de Zn à celle de la cathode de Ni est d'environ 1:1.

**14.** Procédé selon la revendication 12, dans lequel la quantité d'ions $Zn^{2+}$ dissous en provenance de l'anode de Zn est approximativement égale à la quantité du complexe Ni(0) formé.

**15.** Procédé selon la revendication 1, dans lequel l'on utilise un courant alternatif dans l'électro-réduction.

**16.** Procédé d'hydrocyanuration d'oléfines ou d'isomérisation de nitriles d'alcènes, comprenant l'utilisation d'un complexe produit selon la revendication 1 en tant que catalyseur, pour procéder à l'hydrocyanuration ou à l'isomérisation d'une oléfine ou d'un nitrile.

**17.** Procédé en vue de la production électrochimique d'un complexe Ni(0) de phosphite ou de diphosphite comprenant

(a) la dissolution du nickel métallique en provenance d'une anode dans un solvant aprotique dans un dispositif d'électrolyse sans diaphragme, contenant l'anode et la cathode, pour produire des ions de nickel $Ni^{2+}$, et
(b) la réduction des ions nickel en solution en présence d'un ou de plusieurs ligands du phosphore, par utilisation d'un métal qui est plus électropositif que le nickel, en produisant ainsi du nickel oxydé, et
(c) l'électro-réduction et le dépôt dudit nickel oxydé à la cathode, en produisant ainsi le complexe.